# EUROPEAN PATENT SPECIFICATION

(11) **EP 2 599 995 B1**
(45) Date of publication and mention of the grant of the patent: **28.10.2015**
(21) Application number: 11191274.7
(22) Date of filing: 30.11.2011
(51) Int. Cl.: F03D 7/04

(54) **Wind turbine control system**
Windturbinen-Steuerungssystem
Système de contrôle d'une éolienne

(43) Date of publication of application: 05.06.2013
(73) Proprietor: Siemens Aktiengesellschaft, 80333 München (DE)
(72) Inventor: Hansen, Ulrich Vestergaard B., 7400 Herning (DK); Hoejgaard, Jannik, 7330 Brande (DK)

(56) References cited:
- EP-A2- 2 339 175
- DE-B3-102009 005 215
- US-A1- 2009 281 675
- US-A1- 2010 133 815

## Description

### Field of invention

The present invention relates to the field of wind parks. In particular the invention relates to a wind turbine control system. Further, the present invention relates to a method for controlling an operation of a wind turbine. Moreover, the present invention relates to a computer program that controls an operation of a wind turbine, which is adapted for performing the above mentioned method.

### Art Background

Wind turbines may be arranged in wind parks, wherein a plurality of wind turbines can be arranged in such a wind park. Each wind turbine comprises several hardware components for controlling the operation of the wind turbine. For example, a monitoring system may be arranged locally at the wind turbine for monitoring operation conditions of the wind turbine.

In the case of failures of the local hardware components, the hardware components have to be examined and eventually repaired most directly at the wind turbine. Use of physical hardware components being locally located may lead to a relatively high "mean time to repair" and "mean time to recover" and, at least most of the time, require a physical presence to the hardware.

US 2009/281675 discloses a control structure of wind turbines or wind farms with a local wind turbine controller and a central remote control unit having means to monitor and control the wird turbines or wind farms.

Therefore there may be a need for providing a more efficient wind turbine control system, which is easier to handle.

### Summary of the Invention

This need may be met by the subject matter according to the independent claims. Advantageous embodiments of the present invention are described by the dependent claims.

According to a first aspect of the invention, there is provided a wind turbine control system for controlling an operation of a wind turbine based on information provided by sensors of the wind turbine. The wind turbine control system comprises a wind turbine controller being arranged locally at the wind turbine and being adapted to adjust operation parameters of the wind turbine, and a central control unit being arranged remote from the wind turbine. The wind turbine controller and the central control unit are adapted to communicate with each other. The central control unit comprises a module for virtualizing a first computing device and a second computing device. The first computing device is adapted to monitor the information (a) provided by the sensors of the wind turbine and (b) received by the central control unit. The central control unit is adapted to generate a control signal based on information (a) being provided by the first computing device and (b) being indicative of the information provided by the sensors and is adapted to provide the control signal to the second computing device. The second computing device is adapted to generate an adjusting signal based on the control signal and is adapted to provide the adjusting signal to the wind turbine controller in order to control the operation of the wind turbine by adjusting the operation parameters of the wind turbine.

This aspect of the invention is based on the idea to provide a centralized control system for the wind turbine, for example in an already existing central control unit. Components, which have been located locally at a wind turbine, may now be virtualized in the central control unit.
For this purpose, a first part of components of the control system of a wind turbine which are needed locally, as for example the sensors or the wind turbine controller, i.e. the direct control system of the wind turbine, may be still located locally at the wind turbine. "At" in this context may mean either in or inside the wind turbine or at least in close proximity, whereas the central control unit may be arranged remote, for example in a central control station.

In contrast to the first part of components, a second part of components of the control system, which are not necessarily needed locally at the wind turbine, may be removed from the wind turbine and may be arranged virtually in the central control unit.

For this purpose, the central control unit may comprise a module which is able to provide a virtual environment simulating physical parts of the wind turbine. According to this aspect of the invention, the module virtualizes two computing devices of the wind turbine, i.e. a monitoring device and a control device. The monitoring device provides a monitoring system for monitoring the operation conditions of the wind turbine, inter alia by monitoring signals of sensors being arranged in units of the wind turbine. The control device provides an interface between the central control unit and the wind turbine controller.

The control device may be adapted, inter alia, to protect the wind turbine controller. For instance, communication may pass the control device (or control interface device) before it reaches the wind turbine controller. The control device, i.e. the second computing device may provide for example verification, intrusion protection, user management along with other sophisticated checks. The control device may further be used for storing measurement and actuators position of a predefined time period, for instance some weeks, with a given resolution and to calculate and communicate scientific and present values to the central control unit.

According to another embodiment, further physical components being arranged locally at the wind turbine may be virtualized by the module of the central control unit.

Operation parameters in this context may be for example the pitch angle of the blades, the yaw angle of the nacelle, the rotational speed of the rotor, or any other parameter being able to influence the operation of the wind turbine. The wind turbine controller may control the operation of the wind turbine directly by adjusting the operation parameters. Further, some information, like rotational speed, may be determined on the turbine controller.

The adjusting signal may for example comprise information being contained in the control signal and may be verified before being sent to the wind turbine controller. The wind turbine controller itself may then control the wind turbine based on the adjusting signal and determine new operation parameters for the wind turbine.

The control signal and therefore also the adjusting signal may comprise information being determined by the monitoring unit. For example, the monitoring device may provide information in the form of operation messages comprising for instance status information or commands (start, stop).

The first computing (monitoring) device may be provided with input information or signals from the sensors of the wind turbine. This input information may comprise information about actual operation conditions, like wind speed, vibrations in the turbines main components.

The sensors may be connected via an analogue/digital converter and a network device to the monitoring device within the central control unit.

According to an embodiment of the invention, the wind turbine control system comprises a further wind turbine controller being arranged locally at a further wind turbine and being adapted to adjust operation parameters of the wind turbine, wherein the further wind turbine controller and the central control unit are adapted to communicate with each other, wherein the central control unit comprises a further module for virtualizing a further first computing device and a further second computing device, wherein the further first computing device is adapted to monitor information (a) provided by sensors of the further wind turbine and (b) received by the central control unit, wherein the central control unit is adapted to generate a further control signal based on information (a) being provided by the further first computing device and (b) being indicative of the information provided by the sensors of the further wind turbine and is adapted to provide the control signal to the further second computing device, and wherein the further second computing device is adapted to generate an adjusting signal based on the further control signal and is adapted to provide the adjusting signal to the further wind turbine controller in order to control the operation of the further wind turbine by adjusting operation parameters of the further wind turbine.

The central control unit may comprise two or more, for example a plurality of, modules wherein each module comprises a first and a second computing device. Each module may be assigned to one of a plurality of wind turbine controllers, and therefore to one of a plurality of wind turbines. Thus, one single central control unit may provide control functions for a plurality of wind turbines.

According to a further embodiment of the invention, the central control unit is a supervisory control and data acquisition server.

The supervisory control and data acquisition server (SCADA) may refer to an industrial control system: a computer system monitoring and controlling a process, for example industrial processes like power generation, infrastructure processes like electrical power transmission and distribution, Wind Farms. The SCADA server may comprise the module for virtualizing the first and the second computing device.

According to a further embodiment of the invention, the central control unit is coupled to the wind turbine controller and/or to the sensors of the wind turbine via a network device.

As part of the hardware components of the wind turbine are virtualized remote from the wind turbine, the central control unit may be connected to the network device via a redundant network connection, for example via redundant optical fibers. This may be necessary to ensure a reliable connection between the central control unit and the wind turbine controller.

According to the invention, the wind turbine controller comprises a safety module being adapted to be activated in the case of a failure of a connection between the central control unit and the wind turbine controller.

According to this embodiment, the wind turbine controller may be provided with a safe-mode module or program which may be activated in the case of any failure of the connection between the central control unit and the wind turbine controller, inter alia loss of connection due to electricity failure or any other event leading to a loss of the connection. As parts of the control functions of the wind turbine are located and virtualized in the central control unit remote from the wind turbine, it might have to be ensured that in the case of a failure, for example in the case of a failure of the network connection, the wind turbine is controlled according to a predefined safe-mode.

According to a further embodiment of the invention, a failure of the central control unit comprises a failure of the central control unit and/or a loss of power supply.

A failure of the connection may occur for example due to a blackout or electricity failure of the connection between the central control unit and the wind turbine controller or a failure of the central control unit itself (which may also be caused by an electricity failure).

According to a further embodiment of the invention, the wind turbine controller comprises a monitoring computing device being adapted to monitor the connection between the central control unit and the wind turbine controller and to activate the safety module.

A failure of the connection may be determined for instance when the network connection is lost for a predefined time period. The safety module may be activated and may set the wind turbine controller to a safe-mode.

According to a further embodiment of the invention, the safety module is adapted to adjust the operation parameters of the wind turbine such that the rotational speed of the rotor is equal or less than a predefined rotational speed.

The operation parameters may be adjusted such that the rotational speed of the rotor of the wind turbine does not exceed a maximum allowed rotational speed in the safe mode situation. For example, the wind turbine controller may control the operation of the wind turbine according to stored operation parameters for a safety mode.

According to a further embodiment of the invention, the operation parameters comprises at least one of a pitch angle of the blades of the wind turbine or a yaw angle of the nacelle of the wind turbine. In one embodiment, all three pitch angle values of the blades along with the yaw angle of the nacelle may be stored.

The safe-mode module or program in the wind turbine controller may set the pitch angle of the blades and/or the yaw angle of the nacelle in such a way that the rotational speed of the rotor of the wind turbine does not exceed a maximum allowed rotational speed as defined for a safe mode situation.

According to a further embodiment of the invention, the safety module is adapted to adjust the operation parameters based on values stored in database which is stored in the wind turbine controller and based on information provided by the sensors before the failure.

For example, in situations with high wind speed measured before the failure, the safe-mode module or program may set the pitch angle and/or yaw angle or any other operation parameter according to values from a data base, for example a look-up table, in dependency of the measured wind speed, provided by the sensors, which was sent to the turbine controller from the second device of the central control unit before the failure. In this way the rotor may be stopped or the rotational speed of the rotor may be reduced depending on the look-up table values for the pitch angle and/or yaw angle or any other operation parameter.

According to a further aspect of the invention, it is provided a wind park arrangement comprising a plurality of wind turbines, and a wind turbine control system as described above for controlling an operation of the plurality of wind turbines.

Thus, one single central control unit may control a plurality of wind turbines.

According to a further aspect of the invention, it is provided a method for controlling an operation of a wind turbine by a wind turbine control system based on information provided by sensors of the wind turbine. The wind turbine control system comprises a wind turbine controller being arranged locally at the wind turbine and being adapted to adjust operation parameters of the wind turbine, and a central control unit being arranged remote from the wind turbine. The wind turbine controller and the central control unit are adapted to communicate with each other. The method comprises virtualizing, by a module of the central control unit, a first computing device and a second computing device, monitoring, by the first computing device, the information (a) provided by the sensors of the wind turbine and (b) received by the central control unit. The method comprises further generating, by the central control unit, a control signal based on information (a) being provided by the first computing device and (b) being indicative of the information provided by the sensors and providing the control signal to the second computing device, and generating, by the second computing device, an adjusting signal based on the control signal and providing the adjusting signal to the wind turbine controller in order to control the operation of the wind turbine by adjusting the operation parameters of the wind turbine, and in the case of a failure of a connection between the central control unit and the wind turbine controller, activating a safety module of the wind turbine controller. According to a further aspect of the invention, there is provided a computer program for controlling an operation of a wind turbine, the computer program, when being executed by a data processor, is adapted for controlling the method having the above mentioned features.

As used herein, reference to a computer program is intended to be equivalent to a reference to a program element and/or to a computer readable medium containing instructions for controlling a computer system to coordinate the performance of the above described method.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a wind turbine control system according to an embodiment of the invention.
Figure 2 shows a conventional wind turbine control system.
Figure 3 shows a wind turbine control system according to a further embodiment of the invention.

### Detailed Description

The invention is schematically illustrated in the drawings. It is noted that in different figures, similar or identical elements are provided with the same reference signs.

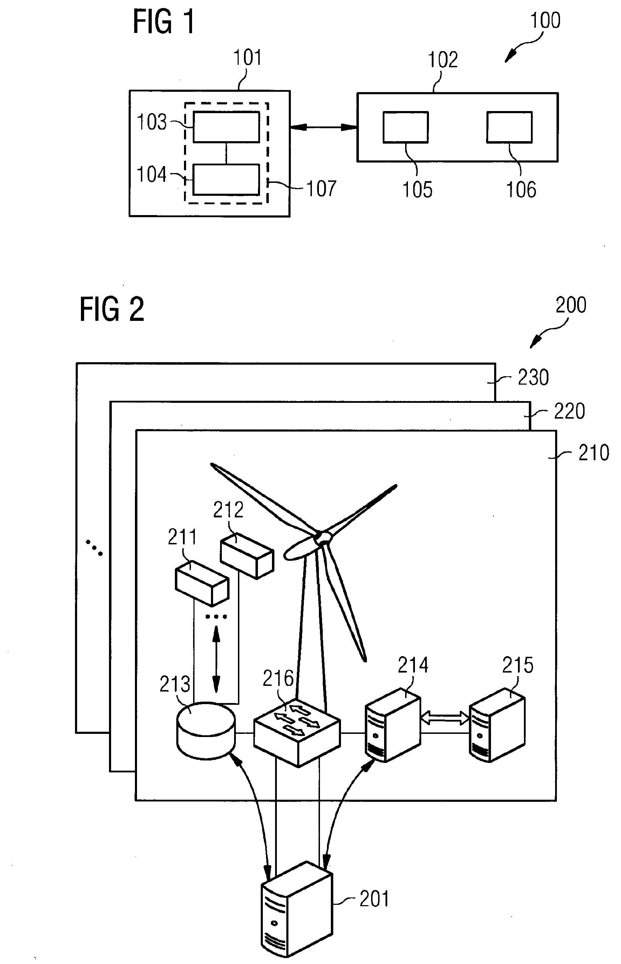

Figure 1 shows a wind turbine control system 100 according to an embodiment of the invention. The wind turbine control system comprises a wind turbine controller 105 being arranged locally at a wind turbine 102 and being adapted to adjust operation parameters of the wind turbine. The wind turbine control system comprises further a central control unit 101 being arranged remote from the wind turbine. The wind turbine controller and the central control unit are adapted to communicate with each other. The central control unit comprises a module 107 for virtualizing a first computing device 103 and a second computing device 104. The first computing device is adapted to monitor information. The information is provided by sensors 106 of the wind turbine and is received by the central control unit. The central control unit is adapted to generate a control signal based on information being provided by the first computing device and being indicative of the information provided by the sensors and is adapted to provide the control signal to the second computing device. The second computing device is adapted to generate an adjusting signal based on the control signal and is adapted to provide the adjusting signal to the wind turbine controller in order to control the operation of the wind turbine by adjusting the operation parameters of the wind turbine.

In common wind turbine control systems, as for example shown in Figure 2, each wind turbine 210, 220, 230 has a set of hardware based solutions to control and operate the wind turbine. A wind turbine comprises a wind turbine controller 215 which is coupled via an interface system 214 to a central control unit 201. The central control unit is arranged outside or remote from the wind turbine. The wind turbine comprises further a monitoring system 213 for monitoring operation conditions via sensors 211, 212. The monitoring system is also coupled to the central control unit. For coupling the physical components of the wind turbine to the central control unit, the wind turbine comprises a network device 216, for instance an Ethernet switch.

In a system as shown in Figure 2, if new functionality is required, a new piece of hardware is typically deployed in the wind turbines. This can be for example IP-to-Serial convertors or industrial grade PC's that serves a certain purpose. This may be an expensive solution due to the fact that it is difficult as well as expensive to make hardware upgrades / replacements in the turbine. During maintenance and troubleshooting, it may require expensive physical presence in the turbine. As physical hardware is used *"Mean Time To Repair"* and *"Mean Time To* Recover" are also relatively high and most often requires physical presence to the hardware.

Thus, according to the present invention, part of the control system may be taken out of the physical wind turbine, and may be virtualized into one secure, scalable and reliable system, which could be in a control room facility/substation. By virtualizing the physical control system instances inside control room facility/substation, it may be possible to eliminate expensive hardware upgrades and/or replacements. Also due to virtualization of the control system components from each turbine, physical presence in each turbine might not be required.

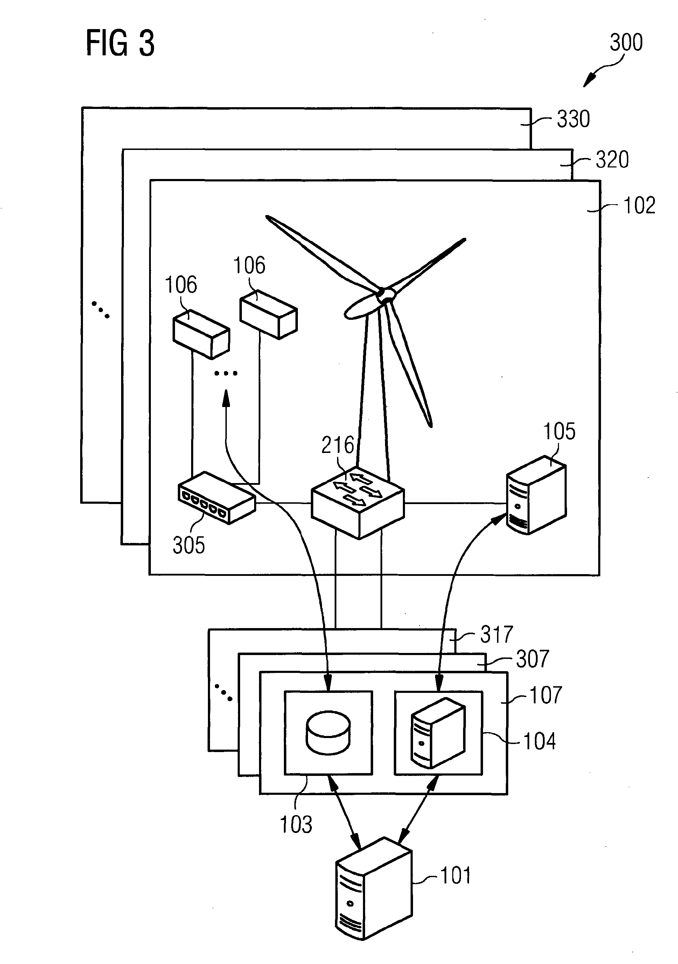

As shown in Figure 3, in the case of a virtualized control system, the turbine control instances can be virtualized in the control room facility/substation, which makes controlling, monitoring, troubleshooting, and maintenance easier. The wind turbine control system 300 comprises a central control unit 101 comprising a module 107, 307, 317 for each wind turbine 102, 320, 330 being coupled to the central control unit. Each module comprises a first computing device 103 for monitoring the sensor outputs of the associated wind turbine and a second computing device 104 for providing an interface to the wind turbine controller 105 of the associated wind turbine.

The wind turbine controller is still arranged locally at the wind turbine and is coupled via a network device 216 to the central control unit. The sensors are coupled to the module 107 via the central control unit by using the network device. The sensors are coupled to the network device via an Analogue/Digital (A/D) converter 305.

As the wind turbine control system is extended outside of the wind turbine it may be supported by redundant and passive fiber optical infrastructure as well as a redundant and active network infrastructure to ensure the connection between the central control unit and the wind turbines. In an embodiment the wind turbine controller in each wind turbine may be provided with a safe-mode module or program which may be activated if the network to the SCADA facility/substation (central control unit) should be lost in a time period. The safe-mode module or program may set the pitch angle of the blades and/or the yaw angle of the nacelle in such a way that the rotational speed of the rotor of the wind turbine does not exceed a maximum allowed rotational speed in a safe mode situation. In situations with high wind speed measured before the network failure, the safe-mode module or program may set the pitch angle and/or yaw angle according to values from a look-up table in dependency of the measured wind speed which was sent to the wind turbine controller from the SCADA substation before the network communication was lost. In this way the rotor may be stopped or the rotational speed of the rotor may be reduced depending on the look-up table values for the pitch angle and/or yaw angle.

By using the described control system, the following aspects may be achieved. The system hardware may be easy and inexpensive to upgrade for future requirements as only one system needs to be upgraded instead of replacing / updating the hardware in all of the wind turbines. There may be a potential large cost reduction of the control system as part of the control system is virtualized and located in a central location. Commissioning may be faster and easier as the control system can be configured in a central location by configuration specialists and are not dependant on the wind turbine being erected and energized. The required space may be reduced in control cabinets in the wind turbine as the hardware may be a virtualized part of the control system, virtualized centrally in a substation. Less configuration of end-devices in the wind turbines might be required. The control system can be simply made redundant. A reduced MTTR (Mean time to recovery) may be achieved in case of errors as it does not require physical access to the wind turbine. MTBF (mean time between failure) may be improved as only one high availability platform is used which is designed to be "always up". The security platform may be improved as it's much easier and less risky to manage security related updates on virtualized environments as they can easily be rolled back to a previously working configuration. Professional and tested technology may be used which is being used in many enterprise environments. Visits to turbines for maintenance may be reduced as only one substation needs to be accessed where the equipment is located. This may also reduce time to repair in case of errors as not every wind turbine needs to be visited. A remote support may be performed, also for maintenance. A reduction of stock value may be achieved as it might be no further required to hold stock the hardware. Also a reduction of wind turbine price may be achieved as expensive hardware might be not needed for every wind turbine, but only one larger system to accommodate the virtualized control system. There might be no hardware dependance on specific versions of hardware. It may be easier to make mass changes to the system.

## Claims

1. A wind turbine control system (100) for controlling an operation of a wind turbine (102) based on information provided by sensors (106) of the wind turbine, the wind turbine control system comprising
a wind turbine controller (105) being arranged locally at the wind turbine and being adapted to adjust operation parameters of the wind turbine, and
a central control unit (101) being arranged remote from the wind turbine,
wherein the wind turbine controller and the central control unit are adapted to communicate with each other,
wherein the central control unit comprises a module (107) for virtualizing a first computing device (103) and a second computing device (104),
wherein the first computing device is adapted to monitor the information (a) provided by the sensors of the wind turbine and (b) received by the central control unit,
wherein the central control unit is adapted to generate a control signal based on information (a) being provided by the first computing device and (b) being indicative of the information provided by the sensors and is adapted to provide the control signal to the second computing device, and
wherein the second computing device is adapted to generate an adjusting signal based on the control signal and is adapted to provide the adjusting signal to the wind turbine controller in order to control the operation of the wind turbine by adjusting the operation parameters of the wind turbine,
wherein the wind turbine controller (105) comprises a safety module being adapted to be activated in the case of a failure of a connection between the central control unit (101) and the wind turbine controller.

2. The wind turbine control system (100) as set forth in claim 1, comprising a further wind turbine controller being arranged locally at a further wind turbine (320) and being adapted to adjust operation parameters of the wind turbine,
wherein the further wind turbine controller and the central control unit (101) are adapted to communicate with each other,
wherein the central control unit comprises a further module (307) for virtualizing a further first computing device and a further second computing device,
wherein the further first computing device is adapted to monitor information (a) provided by sensors of the further wind turbine and (b) received by the central control unit,
wherein the central control unit is adapted to generate a further control signal based on information (a) being provided by the further first computing device and (b) being indicative of the information provided by the sensors of the further wind turbine and is adapted to provide the control signal to the further second computing device, and
wherein the further second computing device is adapted to generate an adjusting signal based on the further control signal and is adapted to provide the adjusting signal to the further wind turbine controller in order to control the operation of the further wind turbine by adjusting operation parameters of the further wind turbine.

3. The wind turbine control system (100) as set forth in any one of the preceding claims, wherein the central control unit (101) is a supervisory control and data acquisition server.

4. The wind turbine control system (100) as set forth in any one of the preceding claims, wherein the central control unit (101) is coupled to the wind turbine controller (105) and/or to the sensors (106) of the wind turbine (102) via a network device (216).

5. The wind turbine control system (100) as set forth in any one of the preceding claims, wherein a failure of the connection between the central control unit (101) and the wind turbine controller (105) comprises a failure of the central control unit and/or a loss of power supply.

6. The wind turbine control system (100) as set forth in claim 5, wherein the wind turbine controller (105) comprises a monitoring computing device being adapted to monitor the connection between the central control unit (101) and the wind turbine controller and to activate the safety module.

7. The wind turbine control system (100) as set forth in any one of the preceding claims, wherein the safety module is adapted to adjust the operation parameters of the wind turbine (102) such that the rotational speed of the rotor is equal or less than a predefined rotational speed.

8. The wind turbine control system (100) as set forth in claim 7, wherein the operation parameters comprises at least one of a pitch angle of the blades of the wind turbine or a yaw angle of the nacelle of the wind turbine.

9. The wind turbine control system (100) as set forth in any one of the preceding claims, wherein the safety module is adapted to adjust the operation parameters based on values stored in a database which is stored in the wind turbine controller (105) and based on information provided by the sensors (106) before the failure.

10. A wind park arrangement (300) comprising
a plurality of wind turbines (102, 320, 330), and
a wind turbine control system (100) as set forth in any one of the preceding claims for controlling an operation of the plurality of wind turbines.

11. A method for controlling an operation of a wind turbine by a wind turbine control system based on information provided by sensors of the wind turbine, wherein the wind turbine control system comprises a wind turbine controller being arranged locally at the wind turbine and being adapted to adjust operation parameters of the wind turbine, and a central control unit being arranged remote from the wind turbine, wherein the wind turbine controller and the central control unit are adapted to communicate with each other, the method comprising
virtualizing, by a module of the central control unit, a first computing device and a second computing device,
monitoring, by the first computing device, the information (a) provided by the sensors of the wind turbine and (b) received by the central control unit,
generating, by the central control unit, a control signal based on information (a) being provided by the first computing device and (b) being indicative of the information provided by the sensors and providing the control signal to the second computing device,
generating, by the second computing device, an adjusting signal based on the control signal and providing the adjusting signal to the wind turbine controller in order to control the operation of the wind turbine by adjusting the operation parameters of the wind turbine, and
in the case of a failure of a connection between the central control unit and the wind turbine controller, activating a safety module of the wind turbine controller.

12. A computer program for controlling an operation of a wind turbine, the computer program, when being executed by a data processor, is adapted to control the method as set forth in claim 11.

## Patentansprüche

1. Windenergieanlagensteuersystem (100) zum Steuern eines Betriebs einer Windenergieanlage (102) auf der Grundlage von von Sensoren (106) der Windenergieanlage bereitgestellten Informationen, wobei das Windenergieanlagensteuersystem Folgendes umfasst:
eine Windenergieanlagensteuerung (105), die vor Ort an der Windenergieanlage angeordnet und so ausgelegt ist, dass sie Betriebsparameter der Windenergieanlage anpasst, und
eine zentrale Steuereinheit (101), die von der Windenergieanlage entfernt angeordnet ist,
wobei die Windenergieanlagensteuerung und die zentrale Steuereinheit so ausgelegt sind, dass sie miteinander kommunizieren,
wobei die zentrale Steuereinheit ein Modul (107) zum Virtualisieren einer ersten Rechenvorrichtung (103) und einer zweiten Rechenvorrichtung (104) umfasst,
wobei die erste Rechenvorrichtung so ausgelegt ist, dass sie die (a) von den Sensoren der Windenergieanlage bereitgestellten und (b) von der zentralen Steuereinheit empfangenen Informationen überwacht,
wobei die zentrale Steuereinheit so ausgelegt ist, dass sie auf der Grundlage von (a) von der ersten Rechenvorrichtung bereitgestellten und (b) die von den Sensoren bereitgestellten Informationen anzeigenden Informationen ein Steuersignal erzeugt und dass sie das Steuersignal für die zweite Rechenvorrichtung bereitstellt, und
wobei die zweite Rechenvorrichtung so ausgelegt ist, dass sie auf der Grundlage des Steuersignals ein Anpassungssignal erzeugt und dass sie das Anpassungssignal für die Windenergieanlagensteuerung bereitstellt, um den Betrieb der Windenergieanlage durch Anpassen der Betriebsparameter der Windenergieanlage zu steuern,
wobei die Windenergieanlagensteuerung (105) ein Sicherheitsmodul umfasst, das so ausgelegt ist, dass es im Falle eines Ausfalls einer Verbindung zwischen der zentralen Steuereinheit (101) und der Windenergieanlagensteuerung aktiviert wird.

2. Windenergieanlagensteuersystem (100) nach Anspruch 1, das eine weitere Windenergieanlagensteuerung umfasst, die vor Ort an einer weiteren Windenergieanlage (320) angeordnet und so ausgelegt ist, dass sie Betriebsparameter der Windenergieanlage anpasst,
wobei die weitere Windenergieanlagensteuerung und die zentrale Steuereinheit (101) so ausgelegt sind, dass sie miteinander kommunizieren,
wobei die zentrale Steuereinheit ein weiteres Modul (307) zum Virtualisieren einer weiteren ersten Rechenvorrichtung und einer weiteren zweiten Rechenvorrichtung umfasst,
wobei die weitere erste Rechenvorrichtung so ausgelegt ist, dass sie (a) von den Sensoren der weiteren Windenergieanlage bereitgestellte und (b) von der zentralen Steuereinheit empfangene Informationen überwacht,
wobei die zentrale Steuereinheit so ausgelegt ist, dass sie auf der Grundlage von (a) von der weiteren ersten Rechenvorrichtung bereitgestellten und (b) die von den Sensoren der weiteren Windenergieanlage bereitgestellten Informationen anzeigenden Informationen ein weiteres Steuersignal erzeugt und dass sie das Steuersignal für die weitere zweite Rechenvorrichtung bereitstellt, und
wobei die weitere zweite Rechenvorrichtung so ausgelegt ist, dass sie auf der Grundlage des weiteren Steuersignals ein Anpassungssignal erzeugt und dass sie das Anpassungssignal für die weitere Windenergieanlagensteuerung bereitstellt, um den Betrieb der weiteren Windenergieanlage durch Anpassen von Betriebsparametern der weiteren Windenergieanlage zu steuern.

3. Windenergieanlagensteuersystem (100) nach einem der vorhergehenden Ansprüche, bei dem es sich bei der zentralen Steuereinheit (101) um einen Überwachungs-, Steuerungs- und Datenerfassungsserver handelt.

4. Windenergieanlagensteuersystem (100) nach einem der vorhergehenden Ansprüche, bei dem die zentrale Steuereinheit (101) über eine Netzwerkvorrichtung (216) mit der Windenergieanlagensteuerung (105) und/ oder den Sensoren (106) der Windenergieanlage (102) verbunden ist.

5. Windenergieanlagensteuersystem (100) nach einem der vorhergehenden Ansprüche, bei dem ein Ausfall der Verbindung zwischen der zentralen Steuereinheit (101) und der Windenergieanlagensteuerung (105) einen Ausfall der zentralen Steuereinheit und/ oder einen Stromversorgungsausfall umfasst.

6. Windenergieanlagensteuersystem (100) nach Anspruch 5, bei dem die Windenergieanlagensteuerung (105) eine überwachende Rechenvorrichtung umfasst, die so ausgelegt ist, dass sie die Verbindung zwischen der zentralen Steuereinheit (101) und der Windenergieanlagensteuerung überwacht und das Sicherheitsmodul aktiviert.

7. Windenergieanlagensteuersystem (100) nach einem der vorhergehenden Ansprüche, bei dem das Sicherheitsmodul so ausgelegt ist, dass es die Betriebsparameter der Windenergieanlage (102) so anpasst, dass die Drehzahl des Rotors maximal einer vorgegebenen Drehzahl entspricht.

8. Windenergieanlagensteuersystem (100) nach Anspruch 7, bei der die Betriebsparameter einen Anstellwinkel der Blätter der Windenergieanlage oder/ und einen Azimutwinkel der Gondel der Windenergieanlage umfassen.

9. Windenergieanlagensteuersystem (100) nach einem der vorhergehenden Ansprüche, bei dem das Sicherheitsmodul so ausgelegt ist, dass es die Betriebsparameter auf der Grundlage von Werten, die in einer Datenbank gespeichert sind, welche in der Windenergieanlagensteuerung (105) gespeichert ist, und von von den Sensoren (106) vor dem Ausfall bereitgestellten Informationen anpasst.

10. Windparkanordnung (300), die Folgendes umfasst:
mehrere Windenergieanlagen (102, 320, 330) und
ein Windenergieanlagensteuersystem (100) nach einem der vorhergehenden Ansprüche zum Steuern eines Betriebs der mehreren Windenergieanlagen.

11. Verfahren zum Steuern eines Betriebs einer Windenergieanlage durch ein Windenergieanlagensteuersystem auf der Grundlage von von Sensoren der Windenergieanlage bereitgestellten Informationen, wobei das Windenergieanlagensteuersystem eine Windenergieanlagensteuerung, die vor Ort an der Windenergieanlage angeordnet und so ausgelegt ist, dass sie Betriebsparameter der Windenergieanlage anpasst, und eine zentrale Steuereinheit umfasst, die von der Windenergieanlage entfernt angeordnet ist, wobei die Windenergieanlagensteuerung und die zentrale Steuereinheit so ausgelegt sind, dass sie miteinander kommunizieren, wobei das Verfahren Folgendes umfasst:
Virtualisieren einer ersten und einer zweiten Rechenvorrichtung durch ein Modul der zentralen Steuereinheit,
Überwachen der (a) von den Sensoren der Windenergieanlage bereitgestellten und (b) von der zentralen Steuereinheit empfangenen Informationen durch die erste Rechenvorrichtung,
Erzeugen eines Steuersignals auf der Grundlage von (a) von der ersten Rechenvorrichtung bereitgestellten und (b) die von den Sensoren bereitgestellten Informationen anzeigenden Informationen und Bereitstellen des Steuersignals für die zweite Rechenvorrichtung durch die zentrale Steuereinheit,
Erzeugen eines Anpassungssignals auf der Grundlage des Steuersignals und Bereitstellen des Anpassungssignals für die Windenergieanlagensteuerung durch die zweite Rechenvorrichtung, um den Betrieb der Windenergieanlage durch Anpassen der Betriebsparameter der Windenergieanlage zu steuern, und
Aktivieren eines Sicherheitsmoduls der Windenergieanlagensteuerung im Falle eines Ausfalls einer Verbindung zwischen der zentralen Steuereinheit und der Windenergieanlagensteuerung.

12. Computerprogramm zum Steuern eines Betriebs einer Windenergieanlage, wobei das Computerprogramm so ausgelegt ist, dass es, wenn es von einem Datenprozessor ausgeführt wird, das Verfahren nach Anspruch 11 steuert.

## Revendications

1. Système de commande (100) d'éolienne, destiné à commander un fonctionnement d'éolienne (102) sur la base d'informations fournies par des capteurs (106) de l'éolienne, le système de commande d'éolienne comprenant :
un dispositif de commande (105) d'éolienne disposé localement au niveau de l'éolienne et conçu pour régler des paramètres de fonctionnement de l'éolienne, et
une unité de commande centrale (101) disposée à distance de l'éolienne,
dans lequel le dispositif de commande d'éolienne et l'unité de commande centrale sont conçus pour communiquer entre eux,
dans lequel l'unité de commande centrale comprend un module (107) destiné à virtualiser un premier dispositif informatique (103) et un second dispositif informatique (104),
dans lequel le premier dispositif informatique est conçu pour contrôler les informations (a) fournies par les capteurs de l'éolienne et (b) reçues par l'unité de commande centrale,
dans lequel l'unité de commande centrale est conçue pour produire un signal de commande sur la base d'informations (a) fournies par le premier dispositif informatique et (b) indiquant les informations fournies par les capteurs et est conçue pour délivrer le signal de commande au second dispositif informatique, et
dans lequel le second dispositif informatique est conçu pour produire un signal de réglage sur la base du signal de commande et est conçu pour délivrer le signal de réglage au dispositif de commande d'éolienne afin de commander le fonctionnement de l'éolienne en réglant les paramètres de fonctionnement de l'éolienne,
dans lequel le dispositif de commande (105) d'éolienne comprend un module de sécurité conçu pour être activé en cas de défaillance d'une connexion entre l'unité de commande centrale (101) et le dispositif de commande d'éolienne.

2. Système de commande (100) d'éolienne selon la revendication 1, comprenant un autre dispositif de commande d'éolienne disposé localement au niveau d'une autre éolienne (320) et conçu pour régler des paramètres de fonctionnement de l'éolienne, dans lequel l'autre dispositif de commande d'éolienne et l'unité de commande centrale (101) sont conçus pour communiquer entre eux, dans lequel l'unité de commande centrale comprend un autre module (307) destiné à virtualiser un autre premier dispositif informatique et un autre second dispositif informatique,
dans lequel l'autre premier dispositif informatique est conçu pour contrôler des informations (a) fournies par des capteurs de l'autre éolienne et (b) reçues par l'unité de commande centrale,
dans lequel l'unité de commande centrale est conçue pour produire un autre signal de commande sur la base d'informations (a) fournies par l'autre premier dispositif informatique et (b) indiquant les informations fournies par les capteurs de l'autre éolienne et est conçue pour délivrer le signal de commande à l'autre second dispositif de commande, et
dans lequel l'autre second dispositif informatique est conçu pour produire un signal de réglage sur la base de l'autre signal de commande et est conçu pour délivrer le signal de réglage à l'autre dispositif de commande d'éolienne afin de commander le fonctionnement de l'autre éolienne en réglant des paramètres de fonctionnement de l'autre éolienne.

3. Système de commande (100) d'éolienne selon l'une quelconque des revendications précédentes, dans lequel l'unité de commande centrale (101) est un serveur de commande de supervision et d'acquisition de données.

4. Système de commande (100) d'éolienne selon l'une quelconque des revendications précédentes, dans lequel l'unité de commande centrale (101) est couplée au dispositif de commande (105) d'éolienne et/ou aux capteurs (106) de l'éolienne (102) par l'intermédiaire d'un dispositif de réseau (216).

5. Système de commande (100) d'éolienne selon l'une quelconque des revendications précédentes, dans lequel une défaillance de la connexion entre l'unité de commande centrale (101) et le dispositif de commande (105) d'éolienne comprend une défaillance de l'unité de commande centrale et/ou une coupure de l'alimentation en énergie.

6. Système de commande (100) d'éolienne selon la revendication 5, dans lequel le dispositif de commande (105) d'éolienne comprend un dispositif informatique de contrôle conçu pour contrôler la connexion entre l'unité de commande centrale (101) et le dispositif de commande d'éolienne et pour activer le module de sécurité.

7. Système de commande (100) d'éolienne selon l'une quelconque des revendications précédentes, dans lequel le module de sécurité est conçu pour régler les paramètres de fonctionnement de l'éolienne (102) de manière que la vitesse de rotation du rotor soit inférieure ou égale à une vitesse de rotation prédéfinie.

8. Système de commande (100) d'éolienne selon la revendication 7, dans lequel les paramètres de fonctionnement comprennent au moins un angle de calage des pales de l'éolienne ou un angle de lacet de la nacelle de l'éolienne.

9. Système de commande (100) d'éolienne selon l'une quelconque des revendications précédentes, dans lequel le module de sécurité est conçu pour régler les paramètres de fonctionnement sur la base de valeurs stockées dans une base de données qui est stockée dans le dispositif de commande (105) d'éolienne et sur la base d'informations fournies par les capteurs (106) avant la défaillance.

10. Agencement de parc éolien (300) comprenant :
une pluralité d'éoliennes (102, 320, 330), et
un système de commande (100) d'éolienne selon l'une quelconque des revendications précédentes, destiné à commander un fonctionnement de la pluralité d'éoliennes.

11. Procédé de commande de fonctionnement d'une éolienne au moyen d'un système de commande d'éolienne, sur la base d'informations fournies par des capteurs de l'éolienne, dans lequel le système de commande d'éolienne comprend un dispositif de commande d'éolienne disposé localement au niveau de l'éolienne et conçu pour régler des paramètres de fonctionnement de l'éolienne, et une unité de commande centrale disposée à distance de l'éolienne, dans lequel le dispositif de commande d'éolienne et l'unité de commande centrale sont conçus pour communiquer entre eux, le procédé comprenant les étapes consistant à :
virtualiser, au moyen d'un module de l'unité de commande centrale, un premier dispositif informatique et un second dispositif informatique,
contrôler, à l'aide du premier dispositif informatique, les informations (a) fournies par les capteurs de l'éolienne et (b) reçues par l'unité de commande centrale, produire, à l'aide de l'unité de commande centrale, un signal de commande sur la base d'informations (a) fournies par le premier dispositif informatique et (b) indiquant les informations fournies par les capteurs, et délivrer le signal de commande au second dispositif informatique, produire, à l'aide du second dispositif informatique, un signal de réglage sur la base du signal de commande et délivrer le signal de réglage au dispositif de commande d'éolienne afin de commander le fonctionnement de l'éolienne en réglant les paramètres de fonctionnement de l'éolienne, et
en cas de défaillance d'une connexion entre l'unité de commande centrale et le dispositif de commande d'éolienne, activer un module de sécurité du dispositif de commande d'éolienne.

12. Programme informatique destiné à commander un fonctionnement d'éolienne, le programme informatique, lorsqu'il est exécuté par un processeur de données, est conçu pour commander le procédé selon la revendication 11.
